(19) Europäisches Patentamt
European Patent Office
Office européen des brevets

(11) Veröffentlichungsnummer: **0 193 892**
**B1**

(12) # EUROPÄISCHE PATENTSCHRIFT

(45) Veröffentlichungstag der Patentschrift: **11.10.89**

(51) Int. Cl.⁴: **G11B 7/24**

(21) Anmeldenummer: **86102620.1**

(22) Anmeldetag: **28.02.86**

(54) **Optisches Aufzeichnungsmedium.**

(30) Priorität: **02.03.85 DE 3507379**

(43) Veröffentlichungstag der Anmeldung: **10.09.86 Patentblatt 86/37**

(45) Bekanntmachung des Hinweises auf die Patenterteilung: **11.10.89 Patentblatt 89/41**

(84) Benannte Vertragsstaaten: **CH DE FR GB IT LI NL**

(56) Entgegenhaltungen:
**EP-A- 0 097 929**
**EP-A- 0 159 397**
**DE-A- 2 609 149**

(73) Patentinhaber: **BASF Aktiengesellschaft, Carl-Bosch-Strasse 38, D-6700 Ludwigshafen(DE)**

(72) Erfinder: **Schrott, Wolfgang, Dr., 45 Bruesseler Ring, D-6700 Ludwigshafen(DE)**
Erfinder: **Neumann, Peter, Dr., Franz-Schubert-Strasse 1, D-6908 Wiesloch(DE)**

EP 0 193 892 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aufzeichnungsmaterialien, die mit Strahlen hoher Energiedichte, z.B. Laserlicht, eine lokal begrenzte Zustandsänderung erfahren, sind bekannt. Mit dieser thermisch ausgelösten Zustandsänderung, z. B. Verdampfen, Änderung des Fließverhaltens oder Ausbleichen, ist eine Änderung der optischen Eigenschaften, z. B. der Absorption durch Änderung des Absorptionsmaximums oder der Extinktion verbunden, welche zur Informations- oder Datenaufzeichnung ausgenutzt werden kann.

Wegen der geringen Größe des Bauelementes, seines geringen Energiebedarfs und der Möglichkeit der direkten Modulation der optischen Ausgangsleistung durch Modulation des elektrischen Antriebstromes eignen sich Festkörper-Injektionslaser, die im nahen Infrarot emittieren, vor allem der AlGaAs-Laser, der im Wellenlängenbereich zwischen etwa 700 und 950 nm arbeitet, besonders gut als Lichtquelle für ein optisches Aufnahmesystem.

Für diese Anwendung ist eine große Anzahl von anorganischen und organischen Materialien bekannt, die in diesem Wellenlängenbereich eine ausreichende Absorption aufweisen und die ihre optischen Eigenschaften durch Absorption der Strahlung und damit der darin enthaltenen Energie im angegebenen Wellenlängenbereich durch Ablösen, Verdampfen, Schmelzen oder in anderer Weise verändern.

Die bekannten Informationsaufzeichnungsmaterialien bestehen aus einem Träger, auf den dünne Schichten von anorganischen Materialien z. B. Metalle, Halbmetalle, Legierungen oder Chalkogenglas oder organischen Verbindungen, z. B. IR-Farbstoffe, aufgebracht sind. Die dünnen Schichten werden vor allem durch Aufdampfen im Vakuum oder durch Zerstäubungstechniken erzeugt. Die Dicke der Schichten sollte so gewählt werden, daß die gesamte eingestrahlte Strahlung absorbiert wird, es sei denn, daß Interferenzphänomene ausgenutzt werden sollen. Der Träger kann aus Glas oder einem geeigneten Kunststoff, z. B. Polycarbonat, Polymethylmethacrylat, Polystyrol, Polystyrol-Copolymere, Polyvinylchlorid oder Polymethylpenten, bestehen.

Für die Anwendung als Speichemedium ist es erforderlich, daß sich die amorphen Schichten über längere Zeiträume nicht verändern.

Alterungsprozesse, z. B. Kristallisation oder Ausbleichen durch Licht und Wärme, welche die Morphologie der Speicherschicht verändern, treten bei dünnen, aufgedampften Schichten relativ häufig auf. Neutrale IR-Farbstoffe in Polymerfilmen, ionogene IR-Farbstoffe in verlackter Form oder an Polymere chemisch gebundene IR-Chromophore sollten über längere Zeiträume stabiler sein. Außerdem haben letztere den Vorteil, eines wirtschaftlicheren Herstellungsverfahrens.

Optische Aufzeichnungsmedien für den Betrieb mit Halbleiter-Injektionslasern sind in großem Umfang hinsichtlich Trägermaterial, Reflektormaterial und laserlichtempfindlicher Schicht bekannt. Als organische IR-Farbstoffe werden unterschiedlich substituierte Phthalocyanine mit verschiedenen Zentralmetallatomen beschrieben, die sowohl durch Aufdampfen als auch durch Spin-Coating (Dye-in-Polymer) zu laserlichtempfindlichen Schichten verarbeitet werden (US-PS 44 58 004 und 42 41 355; EP-A 13 453, 83 991 und 84 729; JP-OS 067 093/1984, 082 095/1982 und 082 096/1982).

Auch Dithiolen-Komplexe mit verschiedenen Substituenten und Zentralmetallatomen, insbesondere aber Nickel, Palladium und Platin, wurden in aufgedampften Schichten oder in Polymerschichten (Dye-in-Polymer) für optische Datenspeicher verwendet (US-PS 43 20 489; DE-OS 29 51 341, 33 19 738 und 30 32 135).

Nach den JP-OS 11 385/1984 können auch, insbesondere die geladenen 2:1-Komplexe mit Chrom und Kobalt als Zentralatom, die im Wellenlängenbereich zwischen 700 und 900 nm ein Absorptionsmaximum zeigen, in Bindemitteln verwendet werden.

Anthrachinon- und Triphenylmethan-Farbstoffe, sowie Pyrylium- und Thiopyrylium-Salze werden ebenfalls für die Anwendung in optischen Aufzeichnungsmedien beschrieben.

Weiterhin wurden auch Methinfarbstoffe in optischen Aufzeichnungsmedien verwendet. Hierfür sind solche Farbstoffindividuen von besonderer Bedeutung, deren Methinkette durch konjugationsfähige Fünf- oder Sechsringe stabilisiert ist. Außerdem wurden auch Quadratsäure-Derivate in opt. Aufzeichnungsmaterialien verwendet (EP-A 116 381, JP-OS 112 792/1983 und 220 143/1983).

Aus den DE-A 2 609 149 und 2 707 086 sind Cyclopropanverbindungen der Formel

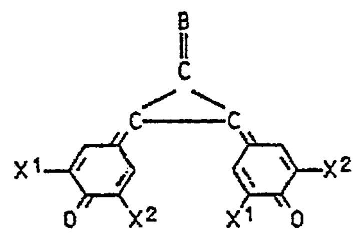

bekannt, in der B für =0 oder

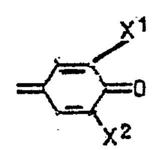

und $X^1$ und $X^2$ für Wasserstoff, Chlor, Brom, Jod, Amino, Carboxy, Carbamoyl, Carbonylamino, für gegebenenfalls durch Halogen substituiertes Alkyl, Alkoxy, für gegebenenfalls durch Halogen, Alkyl oder Alkoxy substituiertes Phenyl oder für Phenoxy stehen. Die Cyclopropanverbindungen werden nach den Angaben in der angegebenen Literatur als Sensibilisatoren in halbleitenden Massen und elektrophotographischen Schichten verwendet.

Die Aufgabe der vorliegenden Erfindung war es weitere Farbstoffe bereitzustellen, die im nahen Infrarot eine hohe Absorption aufweisen und in polymeren Bindemitteln leicht bis gut löslich sind und dementsprechend für optische Aufzeichnungsmedien geeignet sind.

Es wurde gefunden, daß unter den löslichen nicht ionischen Farbstoffen die Trichinocyclopropane der Formel

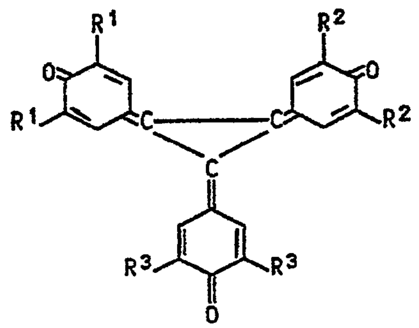

in der $R^1$, $R^2$ und $R^3$ unabhängig voneinander für lineares oder verzweigtes $C_1$- bis $C_{12}$-Alkyl stehen, für optische Aufzeichnungsmedien besonders geeignet sind. Dementsprechend betrifft die Erfindung Aufzeichnungsmedien aus einem Träger und einer Farbstoff enthaltenden Polymerschicht, worin die Polymerschicht mindestens ein Trichinocyclopropan der Formel (I) enthält, worin $R^1$, $R^2$ und $R^3$ die vorstehend angegebene Bedeutung haben.

Die in den Aufzeichnungsmedien gemäß der Erfindung in der Licht absorbierende Schicht verwendeten Farbstoffe absorbieren stark bei der Wellenlänge der Halbleiterlaser von ca. 700 bis 950 nm. Die Schicht kann auf eine lichtreflektierende Schicht so aufgebracht werden, daß man glatte Absorptionsschichten von optischer Qualität erhält.

Die neuen Aufzeichnungsmedien sind mit einem Halbleiter-Laser beschreibbar und lesbar. Aufgund der hohen Lichtabsorption der Farbstoffe sind die erfindungsgemäßen Aufzeichnungsmedien sehr empfindlich gegenüber dem Licht des Halbleiter-Lasers.

Zur Verwendung von Lasern, die in anderen Wellenlängenbereichen emittieren, können Mischungen mit Farbstoffen aus den oben genannten Substanzklassen (substituierte Phthalocyanine, substituierte Dithiolen-Komplexe, Azofarbstoffe, Anthrachinon- und Triphenylmethan-Farbstoffe, Methinfarbstoffe und Quadratsäure-Derivate sowie Pyrylium- oder Thiopyryliumsalze) verwendet werden. In diese Schichten können Informationen mit hohem Signal zu Rauschen-Verhältnis eingeschrieben werden.

Als Farbstoffe (I) kommen solche in Betracht, bei denen $R^1$, $R^2$ und $R^3$ für $C_1$- bis $C_{12}$-Alkyl stehen.

Im einzelnen sind z. B. für $R^1$, $R^2$ und $R^3$ zu nennen:

Methyl, Ethyl, n- und i-Propyl, n- und i-Butyl, 2-Butyl- tert.-Butyl, Amyl, n-Hexyl, n-Octyl, 2-Ethylhexyl, Decyl, Nonyl, Dodecyl.

Vorzugsweise stehen $R^1$, $R^2$ und $R^3$ für $C_1$- bis $C_4$-Alkyl, insbesondere für Methyl, i-Propyl und/oder tert.-Butyl, wobei solche Farbstoffe hervorzuheben sind, bei denen mindestens einer der Reste $R^1$, $R^2$ oder $R^3$ i-Propyl oder tert.-Butyl ist.

Besonders bevorzugt sind Farbstoffe der Formel (I) in der $R^1$, $R^2$ und $R^3$ die in der Tabelle angegebenen Bedeutungen haben:

| Farbstoff | $R^1$ | $R^2$ | $R^3$ | $\lambda_{max}$ ($\log \varepsilon$)[1] | |
|---|---|---|---|---|---|
| I. 1 | i-Pr | i-Pr | i-Pr | 776 | (4,66) |
| I. 2 | t-Bu | t-Bu | t-Bu | 769 | (4,71) |
| I. 3 | Me | t-Bu | t-Bu | 768 | (4,67) |
| I. 4 | i-Pr | t-Bu | t-Bu | 772 | (4,67) |
| I. 5 | i-Pr | i-Pr | t-Bu | 770 | (4,70) |

[1] R. West u. D. C. Zecher, J. A. C. S 92 (1970), S. 158.

Die in den neuen Aufzeichnungsmedien verwendeten Farbstoffe sind bekannt (s. R. West, et al., J. A. C. S. 92 (1970), S. 155 - 161, und die dort zitierte Literatur). Diese Verbindungen lösen sich gut in unpolaren Lösungsmitteln.

Der Aufbau der Aufzeichnungsmedien ist an sich bekannt.

Zwischen der lichtabsorbierenden Schicht und dem Träger kann eine reflektierende Schicht vorhanden sein, so daß das eingestrahlte und durch die farbige Schicht wandernde Licht (so weit es nicht absorbiert wird) an der Reflektorschicht reflektiert wird und nochmals durch die gefärbte Schicht wandert.

Die Belichtung kann auch durch ein transparentes Substrat erfolgen. Als Schichtfolge kommt dann in Frage: Substrat-Absorberschicht- (gegebenenfalls) Reflektor.

Die lichtreflektierende Schicht sollte so beschaffen sein, daß diese das zur Aufnahme und zur Abtastung verwendete Licht möglichst quantitativ reflektiert. Geeignete lichtreflektierende Materialien sind z.B. Aluminium, Rhodium, Gold, Zinn, Blei, Wismut, Kupfer und dielektrische Spiegel. Die Dicke der lichtreflektierenden Schicht soll so groß sein, daß diese das zur Aufnahme oder zum Abtasten benutzte Licht möglichst vollständig reflektiert.

Für diesen Zweck sind Spiegel mit geringer Wärmeleitfähigkeit vorteilhaft. Träger, bzw. die Licht reflektierende Schicht müssen eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen kann der Träger und/oder der Reflektor mit einer Glättungsschicht aus einem duroplastischen oder thermoplastischen Material versehen werden.

Das Aufbringen der erfindungsgemäßen, gegen Laserlicht empfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht. Der Film kann im Vakuum bei erhöhter Temperatur, oder gegebenenfalls durch Strahlung getrocknet bzw. gehärtet werden. Das Aufbringen von metallischen Reflektionsschichten erfolgt vorzugsweise durch Aufdampfen im Vakuum, oder durch Aufbringen geeigneter Metallfolien auf den Träger.

Für das Aufbringen der Absorptionsschichten aus Lösung bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Mischungen dieser Lösungsmittel, eine Lösung oder gegebenenfalls eine Dispersion des Farbstoffs oder Farbstoffgemisches und des Polymeren und setzt gegebenenfalls ein Bindemittel zu.

Als Bindemittel kommen durch Strahlung oder Wärme härtbare Harze, z.B. Photopolymere, Silikonharze sowie Epoxidharze oder thermoplastische Kunststoffe in Betracht.

Bevorzugt sind thermoplastische Kunststoffe mit keinem oder nur sehr geringem kristallinen Anteil und Glastemperaturen von > 35 °C, insbesondere > 75 °C. Darüberhinaus müssen die Kunststoffe mit den Farbstoffen (I) verträglich sein. Geeignet sind beispielsweise wasserunlösliche Bindemittel mit hohem Lösungsvermögen für die Farbstoffe (I), wie (Meth)-Acrylatpolymere und -copolymere, Polystyrolhomo-und -copolymerisate, Polyvinylcarbazol, Polyvinylestercopolymere, Polyvinylchlorid und Celluloseester. Die beim Absorbieren des Laserlichtes entstehende Wärme führt zu einem radial nach außen gerichteten Fließen des Thermoplastes und somit zur Ausbildung von kantenscharfen "Löchern" verbunden mit einem ausgezeichneten Signal/Rausch-Verhalten der Information.

Je nach Systemaufbau wird zuerst die Farbstoff-in-Polymer-Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Sofern die exponierte Farbstoff-in-Polymer-Schicht keine ausreichende mechanische Stabilität aufweist, kann diese mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im Vakuum, vornehmlich von fluorierten Polymeren, eine Schutzschicht bilden können.

Wenn der Datenspeicher aus zwei gleichen oder verschiedenen Aufzeichnungsmedien in Form eines "sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums verzichtet werden. Wenn auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Das Beispiel soll die Erfindung weiter erläutern.

Beispiel

Zwei 1,2 mm dicke Polymethylmethacrylatscheiben mit einem Durchmesser von 120 mm und einem Innenlochdurchmesser von 15 mm werden vorgereinigt (Entfernung von Staubpartikeln) und unter Reinraumbedingungen mit einer etwa 0,3 µm dicken Glättungsschicht aus hochmolekularem Polymethylmethacrylat versehen. Auf die Glättungsschicht wird eine Lösung von 1 g des Farbstoffs (1.2) und 1 g eines Copolymeren aus Methacrylat/Methacrylsäure (70 : 30) in Chloroform nach dem Schleuderbeschichtungsverfahren bei 4800 U/min auf die Scheiben aufgetragen. Nach dem Trocknen betrug die Dicke der Dye-in-Polymer-Schicht ca. 0,3 µm. In einer Vakuumbedampfungsapparatur wurde ein Aluminiumspiegel der Schichtdicke 0,03 µm auf die Farbstoffschicht aufgebracht und darauf eine Schutzschicht von 1,2 µm aus Polystyrol in Xylol aufgeschleudert.

Beide Platten werden sandwichartig mit den beschichteten Seiten nach innen über geeignete Abstandsringe zusammengeklebt, so daß ein Luftspalt von etwa 0,4 mm verblieb. In das Aufzeichnungsmedium wurden mit einem justierten AlGaAs-Laser ($\lambda$ = 820 nm) einzelne, etwa 1 µm große Löcher in die lichtempfindliche Schicht geschrieben. Diese Loch-Information ließ sich mit Halbleiterlaserlicht wieder auslesen, wobei die beste Empfindlichkeit und ein sehr gutes Signal-zu-Rauschen-Verhältnis mit Laserlicht der Wellenlänge $\lambda$ = 780 nm erreicht wurde.

**Patentansprüche**

1. Optisches Aufzeichnungsmedium aus einem Träger und einer Farbstoff enthaltenden Polymerschicht, dadurch gekennzeichnet, daß die Polymerschicht mindestens ein Trichinocyclopropan der Formel

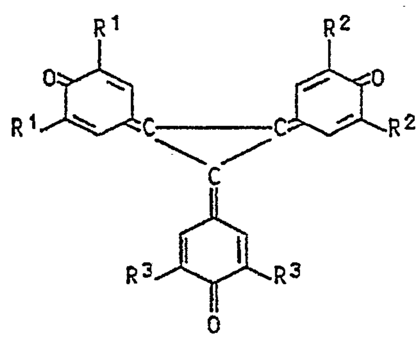

enthält, in der $R^1$, $R^2$ und $R^3$ unabhängig voneinander lineares oder verzweigtes $C_1$- bis $C_{12}$-Alkyl bedeuten.

2. Aufzeichnungsmedium gemäß Anspruch 1, dadurch gekennzeichnet, daß $R^1$, $R^2$ und $R^3$ unabhängig voneinander für Methyl, i-Propyl oder tert.-Butyl stehen.

3. Aufzeichnungsmedium gemäß den Ansprüchen 1 oder 2, dadurch gekennzeichnet, daß mindestens $R^1$ oder $R^2$ oder $R^3$ für Isopropyl oder tert.-Butyl stehen.

## Claims

1. An optical recording material consisting of a base and a dye-containing polymer layer, wherein the polymer layer contains one or more triquinocyclopropanes of the formula

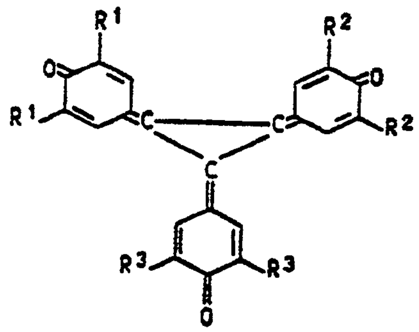

where $R^1$, $R^2$ and $R^3$ independently of one another are each straight-chain or branched $C_1$–$C_{12}$-alkyl.

2. A recording material as claimed in claim 1, wherein $R^1$, $R^2$ and $R^3$ independently of one another are each methyl, isopropyl or tert-butyl.

3. A recording material as claimed in either of claims 1 and 2, wherein one or more of $R^1$, $R^2$ and $R^3$ is isopropyl or tert-butyl.

## Revendications

1. Milieu d'enregistrement optique formé d'un support et d'une couche de polymère contenant un colorant, caractérisé en ce que la couche de polymère contient au moins un triquinocyclopropane de formule

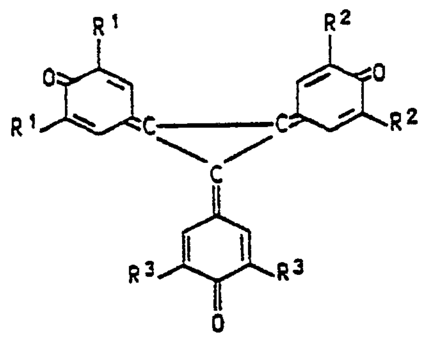

dans laquelle $R^1$, $R^2$ et $R^3$ représentent indépendamment les uns des autres un groupement alkyle en $C_1$–$C_{12}$ linéaire ou ramifié.

2. Milieu d'enregistrement selon la revendication 1, caractérisé en ce que $R^1$, $R^2$ et $R^3$ représentent indépendamment les uns des autres des groupements méthyle, isopropyle ou tert.-butyle.

3. Milieu d'enregistrement selon l'une ou l'autre des revendications 1 et 2, caractérisé en ce qu'au moins $R^1$ ou $R^2$ ou $R^3$ est mis pour un groupement isopropyle ou tert.-butyle.